# EUROPÄISCHE PATENTSCHRIFT

(11) **EP 1 547 916 B1**
(45) Veröffentlichungstag und Bekanntmachung des Hinweises auf die Patenterteilung: **18.10.2006**
(21) Anmeldenummer: 04028576.9
(22) Anmeldetag: 02.12.2004
(51) Int. Cl.: B64C 1/14, E06B 3/46, E05D 15/10

(54) **Schiebetor für ein Flugzeug**
Sliding door for an aircraft
Porte coulissante d'un aéronef

(30) Priorität: 22.12.2003 DE 10360484
(43) Veröffentlichungstag der Anmeldung: 29.06.2005
(73) Patentinhaber: Airbus Deutschland GmbH, 21129 Hamburg (DE)
(72) Erfinder: Pahl, Günter, 22589 Hamburg (DE)
(74) Vertreter: Maiwald Patentanwalts GmbH

(56) Entgegenhaltungen:
- GB-A- 624 831
- GB-A- 1 228 969
- US-A- 2 445 131
- US-A- 5 303 508
- US-B1- 6 189 833

## Beschreibung

Die vorliegende Erfindung betrifft ein Flugzeugtor und ein entsprechendes Verfahren.

Konventionelle Flugzeugtore, beispielsweise Frachttore werden mittels Hydraulikzylindern über ein Scharnier nach oben geöffnet. Solche, nach oben klappbare Frachttore müssen "failsafe" gegen ungewolltes Herunterfallen gesichert werden. Dies bedingt einen erhöhten Strukturaufwand mit einem Mehrgewicht. Außerdem bedingt dies eine sehr aufwendige Verriegelungsmechanik. Überdies sind solche bekannte Frachttore sehr windempfindlich, so dass ab 40 Knoten Windgeschwindigkeit das Frachttor üblicherweise nicht mehr geöffnet werden kann.

US 6,189,833 B1 offenbart eine zweiteilige Flugzeugtür zum Verschließen einer Öffnung eines Fahrzeugrumpfes bzw. einer Schale eines Flugzeuges (die Zeichnungen zeigen zwar lediglich einen Helikopter, in der Beschreibung ist jedoch auch der Einsatz in einem Flugzeug genannt). Die Flugzeugtür umfasst eine Schiebetür und eine schwenkbare Tür. Bei einem Verschließen des Schiebetür verbleibt in der Öffnung ein Spalt, welcher durch die schwenkbare Tür verschlossen werden kann.

US 2,445,131 offenbart einen Flugzeugrumpf mit einer einteiligen Schiebetür zum vollständigen Verschließen eines Eingangs in dem Flugzeugrumpf. Die Schiebetür ist mittels zweier Linearführungen verschiebbar gelagert, die in Höhe der Oberkante bzw. der Unterkante der Schiebetür entlang der Längsrichtung des Flugzeugrumpfes angebracht sind. Die beiden Linearführungen sind jeweils über einen Verschiebemechanismus senkrecht zur Längsrichtung des Flugzeugrumpfes verschiebbar. Die Schiebetür wird bei einem Öffnen des Eingangs zunächst senkrecht zur Längsrichtung des Flugzeugrumpfes nach außen verschoben, bis sie sich außerhalb des Flugzeugrumpfes befindet. Danach wird die Schiebetür entlang der Längsrichtung des Flugzeugrumpfes verschoben, so dass der Eingangsbereich vollständig frei wird. Beim Schließen des Eingangs wird die Schiebetür zunächst entlang der Längsrichtung des Flugzeugrumpfes verschoben, bis die Schiebetür die Eingangsöffnung vollständig abdeckt. Dann wird die Schiebetür senkrecht zur Längsrichtung des Flugzeugrumpfes in die Eingangsöffnung gedrückt, so dass diese vollständig verschlossen ist.

GB 1 228 969 offenbart ebenfalls einen Mechanismus zum vollständigen Verschließen eines Flugzeugrumpf-Eingangs mittels einer einteiligen Tür. Der Mechanismus ermöglicht ein Öffnen des Eingangs, indem die Tür zunächst aus dem Öffnungsbereich hinaus geschwungen und danach parallel zur Längsachse des Flugzeugrumpfes verschoben wird. Entsprechend wird die Tür bei einem Schließen des Eingangs zunächst in Richtung des Eingangsbereiches verschoben und dann mittels einer Schwenkbewegung in die Eingangsöffnung hinein geschwenkt.

Es ist eine Aufgabe der vorliegenden Erfindung, ein verbessertes Flugzeugtor zum Verschließen einer Öffnung in einer Schale eines Flugzeugs anzugeben, das beispielsweise ein im Vergleich zu den bekannten Frachttoren geringeres Gewicht aufweist.

Gemäß einem Ausführungsbeispiel der vorliegenden Erfindung nach Anspruch 1 wird die obige Aufgabe mit einem Flugzeugtor zum Schließen einer Öffnung in einer Schale eines Flugzeugs gelöst, wobei das Flugzeugtor entlang im Wesentlichen einer Längsrichtung des Flugzeugs versetzbar ist. Die Öffnung in der Schale des Flugzeugs ist größer als das Flugzeugtor, so dass sich bei dem in der Öffnung angeordneten Flugzeugtor zwischen einer ersten Begrenzung des Flugzeugtors und einer zweiten Begrenzung der Öffnung ein Spalt ergibt. Dieser Spalt ist in dem geschlossenen Zustand des Flugzeugtors durch ein erstes Verriegelungselement geschlossen. Durch Einführen des ersten Verriegelungselementes in den Spalt zwischen der Schale und dem Flugzeugtor kann das Flugzeugtor sicher verriegelt werden.

Dadurch, dass das Flugzeugtor in einem geöffneten Zustand im Windschatten des Flugzeugrumpfs angeordnet ist, ist das Flugzeugtor verminderten Lastfällen ausgesetzt. Beispielsweise ist eine Böenluftlast verringert. Auch ist eine Last bei Ausfall eines Hydraulikzylinders der zum Öffnen und Schließen oder Verriegeln des Frachttores vorgesehen sein kann, verringert. Durch die verminderten Lastfälle ergibt sich vorteilhaft eine Strukturgewichtsminderung, die beispielsweise bei einer Vergleichsrechnung gegenüber einem Airbus A300/600 Frachttor eine Gewichtsverminderung von ca. 430 kg betragen kann. Auch kann dadurch, dass das Flugzeugtor eine Bewegung entlang im Wesentlichen der Längsrichtung des Flugzeugs ausführt, und beispielsweise keine Drehbewegung, ein einfacher Führungs- und Verriegelungsmechanismus mit wenig beweglichen Teilen realisiert werden, was wiederum eine Wartungsanfälligkeit und ein Gewicht der Verriegelungsmechanik verringert. Ebenfalls wird vorteilhaft die Windempfindlichkeit des Flachtors gegenüber der bekannten, nach oben aufklappenden Frachttorvariante verringert.

Gemäß einem Ausführungsbeispiel der vorliegenden Erfindung ist zumindest ein zweites Verriegelungselement derart vorgesehen, dass das Flugzeugtor mit einer Bewegung in der Öffnung in der Schale des Flugzeugs verriegelt wird. Diese Bewegung ist im Wesentlichen entlang der Längsrichtung des Flugzeugs. Beispielsweise kann dadurch ein Verriegelungszapfen an dem Frachttor in eine entsprechende Aufnahme in der Schale des Rumpfes des Flugzeugs eingeschoben werden. Vorteilhaft ermöglicht dies eine einfache und sichere Verriegelung. Auch wird dadurch ein sehr einfacher, robuster und wartungsunanfälliger Verriegelungsmechanismus zur Verfügung gestellt.

Gemäß einem weiteren Ausführungsbeispiel der vorliegenden Erfindung ist das Flugzeugtor derart an dem Rumpf oder an der Schale des Flugzeugs gehaltert, dass das Flugzeugtor zum Verriegeln zuerst in der Öffnung angeordnet wird. Dann wird das Flugzeugtor in der Öffnung entlang der Längsrichtung des Flugzeugs zur Verriegelung des zumindest einen zweiten Verriegelungselementes versetzt. Dann, wenn das Flugzeugtor in der Position ist, in der es mittels des zumindest einen zweiten Verriegelungselementes verriegelt ist, wird der Spalt zwischen der Schale des Flugzeugs und dem Flugzeugtor mittels des ersten Verriegelungselementes verschlossen, wodurch eine zweite Verriegelung des Flugzeugtores erzielt wird. Vorteilhaft ist dadurch eine besonders sichere Verriegelung des Flugzeugtores möglich.

Gemäß einem weiteren Ausführungsbeispiel der vorliegenden Erfindung wird das Flugzeugtor mittels einer Führungsschiene, die in der Schale des Flugzeugs angeordnet ist, in die Halteelemente, die an dem Flugzeugtor angeordnet sind, eingreifen, derart gehaltert, dass es ohne Drehbewegung zwischen dem geschlossenen Zustand und dem offenen Zustand versetzbar ist.

Wie zuvor schon angesprochen, ermöglicht dies vorteilhaft eine einfache Führung und Halterung des Flugzeugtors.

Gemäß einem weiteren Ausführungsbeispiel der vorliegenden Erfindung wirken die Führungsschiene und die Halteelemente derart zusammen, dass eine Führung des Flugzeugtors entlang der Längsrichtung des Flugzeugs und entlang der Schwerkraft sichergestellt ist.

Gemäß einem weiteren Ausführungsbeispiel der vorliegenden Erfindung wird zum Öffnen der Flugzeugtür zuerst das erste Verriegelungselement zurückgezogen, damit das Flugzeugtor entlang der Längsrichtung des Flugzeugs der Entriegelung des zumindest zweiten Verriegelungselementes versetzt werden kann. Dann, sobald das Flugzeugtor frei ist, d.h. das zumindest eine zweite Verriegelungselement nicht mehr verriegelt ist, wird das Flugzeugtor entlang einer Normalen auf der Schale des Flugzeugs aus der Öffnung heraus, d.h. zur Außenseite des Rumpfs hin, versetzt. Dann, sobald das Flugzeugtor aus der Öffnung heraus ist, wird das Flugzeugtor relativ zu der Öffnung entlang der Längsrichtung des Flugzeugs derart verschoben, dass die Öffnung freigegeben wird. Vorteilhaft führt, wie zuvor schon angesprochen, das Flugzeugtor keine Drehbewegung aus, sondern wird lediglich entlang einer linearen Bewegungen geführt.

Weitere vorteilhafte Ausführungsbeispiele, insbesondere ein entsprechendes Verfahren zum Öffnen und Schließen einer Öffnung in einer Schale eines Flugzeugs, ergeben sich aus den Unteransprüchen.

Im Folgenden werden Ausführungsbeispiele der vorliegenden Erfindung unter Bezugnahme auf die begleitenden Figuren beschrieben.
- Fig. 1: zeigt eine Seitenansicht eines Ausführungsbeispiels des Flugzeugtores gemäß der vorliegenden Erfindung in geschlossenem Zustand;
- Fig. 2a bis 2d: zeigen verschiedene Stadien des Öffnens des Flugzeugtores in Schnittansicht gemäß einem Ausführungsbeispiel der vorliegenden Erfindung;
- Fig. 3a: zeigt eine dreidimensionale Ansicht der Innenseite des Flugzeugtores gemäß einem Ausführungsbeispiel der vorliegenden Erfindung;
- Fig. 3b: zeigt eine dreidimensionale Seitenansicht des Flugzeugtores von Fig. 3a;
- Fig. 4: zeigt eine dreidimensionale Ansicht der Öffnung in der Schale des Flugzeugs vom Rumpfinneren aus;
- Fig. 5: zeigt Details der Ansicht von Fig. 4;
- Fig. 6: zeigt ein Ausführungsbeispiel einer mittleren Führungsschiene zur Führung des Flugzeugtors gemäß einem Ausführungsbeispiel der vorliegenden Erfindung;
- Fig. 7: zeigt eine Schnittansicht der in Fig. 6 dargestellten Führungsschiene;
- Fig. 8: zeigt ein weiteres Ausführungsbeispiel einer mittleren Führungsschiene in der Schale des Flugzeugs in Schnittansicht;
- Fig. 9: zeigt eine dreidimensionale Ansicht eines Ausführungsbeispiels einer unteren Führungsschiene gemäß der vorliegenden Erfindung;
- Fig. 10a bis 10d: zeigen dreidimensionale Ansichten verschiedener Öffnungsstadien des Flugzeugtores gemäß einem Ausführungsbeispiel der vorliegenden Erfindung;
- Fig. 11a bis 11d: zeigen dreidimensionelle Ansichten der Öffnungsstadien der Fig. 10a bis 10d aus einer anderen perspektivischen Ansicht;
- Fig. 12a: zeigt eine dreidimensionale Ansicht eines Öffnungsstadiums des Flugzeugtors gemäß einem Ausführungsbeispiel der vorliegenden Erfindung;
- Fig. 12b: zeigt ein Detail des zweiten Verriegelungsmechanismus in dem Öffnungsstadium, das in Fig. 12a dargestellt ist;
- Fig. 13a: zeigt eine dreidimensionale Darstellung einer Öffnung des Flugzeugtors gemäß einem Ausführungsbeispiel der vorliegenden Erfindung, wobei das Öffnungsstadium im Vergleich zu der Darstellung von Fig. 12a einem späteren Öffnungszeitpunkt entspricht;
- Fig. 13b: zeigt eine dreidimensionale Darstellung eines zweiten Verriegelungselementes in dem in Fig. 13a dargestellten Öffnungsstadium;

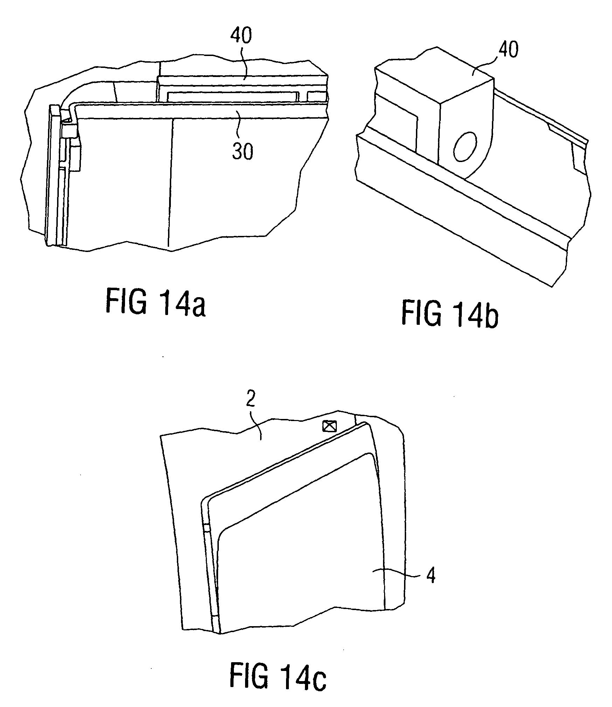

- Fig. 13a bis 14c: zeigen dreidimensionale Ansichten von Details eines ersten Öffnungsstadiums;

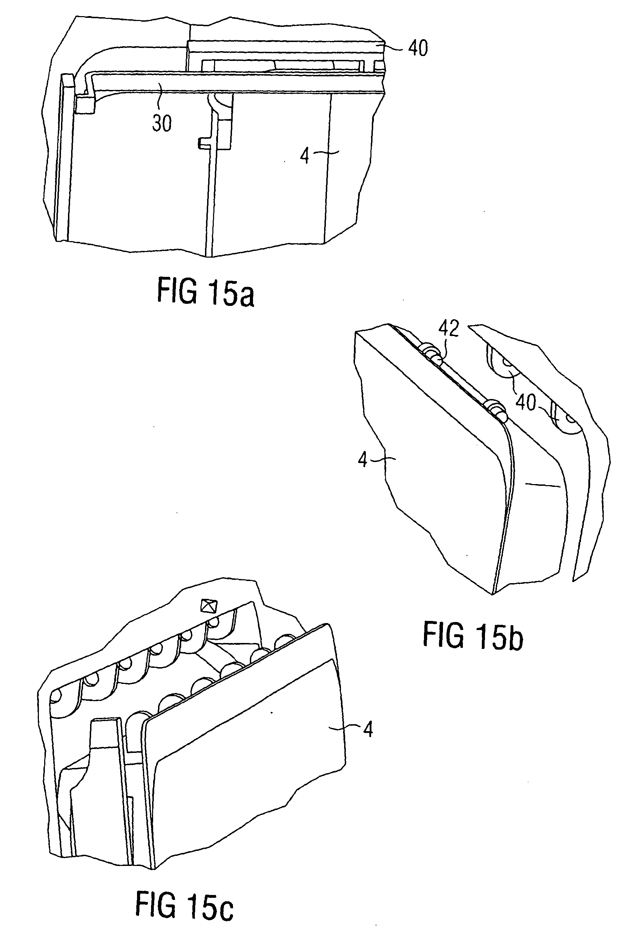

- Fig. 15a bis 15c: zeigen den Fig. 14a bis 14c entsprechende Details zu einem zweiten, späteren Öffnungsstadium;

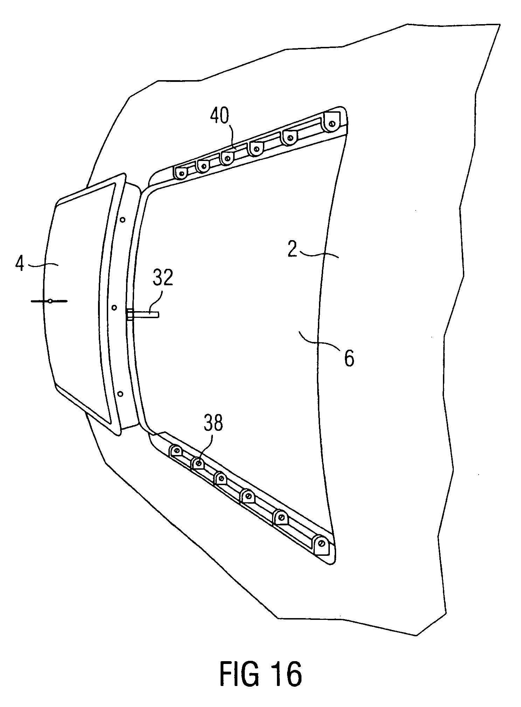

- Fig. 16: zeigt eine erste zweidimensionale Ansicht, in der das Frachttor in der geöffneten Position angeordnet ist; und

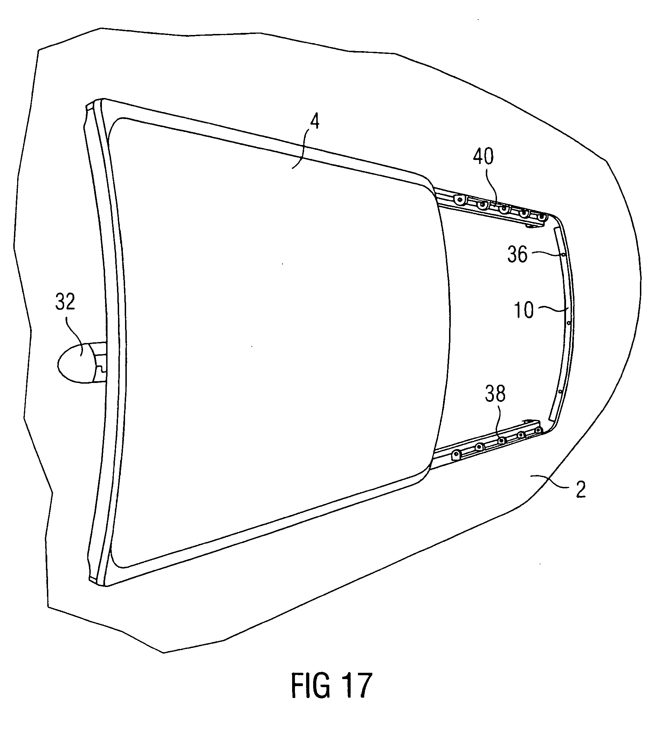

- Fig. 17: zeigt eine zweite dreidimensionale Ansicht, in der das Frachttor in der geöffneten Position dargestellt ist.

Im Folgenden wird die vorliegende Erfindung anhand eines bevorzugten Ausführungsbeispiels der vorliegenden Erfindung, nämlich eines Frachttores beschrieben. Es ist jedoch darauf hinzuweisen, dass die vorliegende Erfindung nicht auf die Verwendung mit einem Frachttor beschränkt ist, sondern beispielsweise auch andere Luken, Passagiereinstiegstüren oder ähnliche Flugzeugtore betreffen kann.

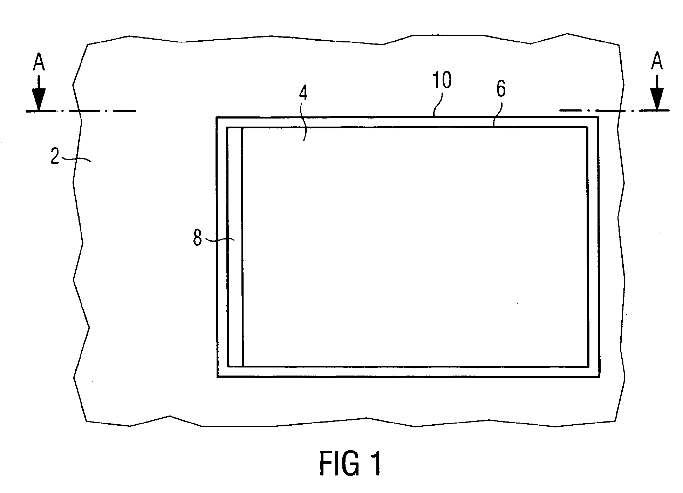

Fig. 1 zeigt eine Seitenansicht eines bevorzugten Ausführungsbeispiels, nämlich des Frachttors gemäß der vorliegenden Erfindung. Die Bezugsziffer 2 in Fig. 1 bezeichnet die Schale des Flugzeugrumpfes. Die Bezugsziffer 4 bezeichnet das in der Öffnung 6 in der Schale 2 angeordnete Frachttor. In Fig. 1 ist das Frachttor in der geschlossenen Position. Die Bezugsziffer 8 in Fig. 1 bezeichnet ein erstes Verriegelungselement, das hier auch mit Verschluss bezeichnet ist. Die Öffnung 6 in der Schale 2 wird durch einen Torrahmen 10, in dem beispielsweise Verriegelungsbuchsen angeordnet sind, definiert. Statt Verriegelungsbuchsen in dem Torrahmen 10 und entsprechende Zapfen in dem Tor 4 ist es auch möglich Zapfen im Rahmen und Buchsen am Tor auszugestalten.

Wie Fig. 1 zu entnehmen ist, weist das Frachttor 4 ein geringeres Ausmaß als die Öffnung 6 auf. Diesbezüglich ist das erste Verschlusselement 8 vorgesehen, das gerade den Spalt zwischen der Öffnung 6 und dem Frachttor 4 verschließt. Mit anderen Worten ist das erste Verschlusselement 8 den Ausmaßen des Spaltes zwischen dem Frachttor 4 und der Öffnung 6 angepasst. Wenn das Frachttor 4, wie in Fig. 1 dargestellt, in der vollkommen verriegelten, das heißt vollkommen geschlossenen Position ist, ist der Spalt durch das erste Verriegelungselement 8 verschlossen, so dass zwischen der Öffnung 6 einerseits und dem ersten Verschlusselement 8 und dem Frachttor 4 möglichst kein Zwischenraum verbleibt. Vorzugsweise sind der Torrahmen 10, das erste Verschlusselement 8 und das Frachttor 4 so in die Schale 2 des Flugzeugrumpfes eingepasst, dass eine nahezu nahtlose Oberfläche erzielt wird. Dies ermöglicht ein Vermeiden von Verwirbelungen der vorbeiströmenden Luft.

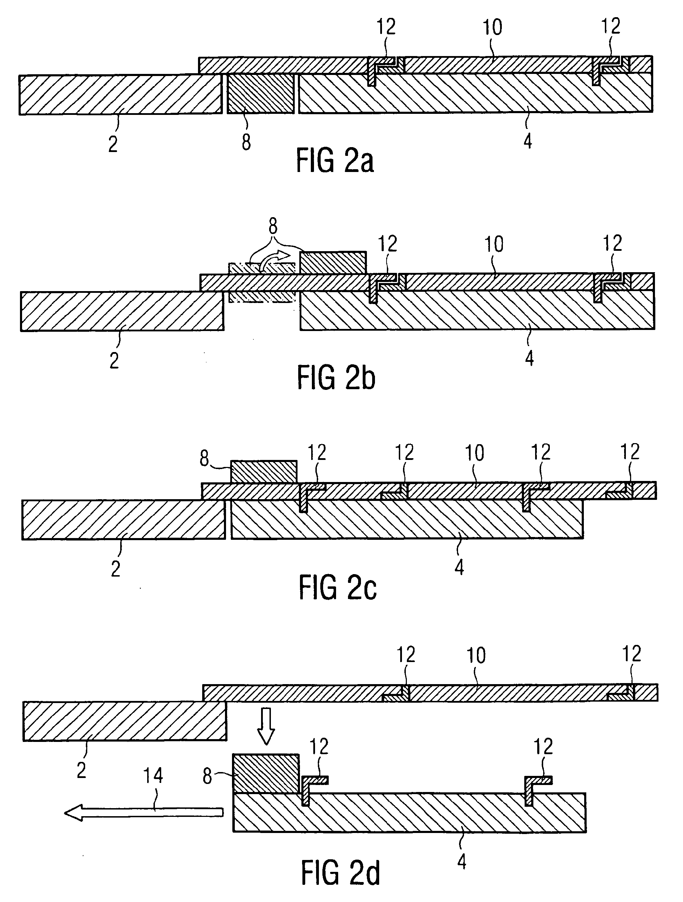

Durch die beiden Pfeile, die mit dem Buchstaben A bezeichnet sind, wird in Fig. 1 eine Schnittansicht definiert. In den Fig. 2a bis 2d werden verschiedene Öffnungsstadien des Frachttores 4 entlang dieser Schnittlinie A-A dargestellt.

In den folgenden Fig. 2 bis 17 werden für gleiche oder sich entsprechende Elemente und Baugruppen die gleichen Bezugsziffern verwendet.

Die Fig. 2a bis 2d zeigen verschiedene Öffnungsstadien des Frachttores 4 in Schnittansicht entlang der Schnittlinie A-A.

Fig. 2a zeigt das Frachttor 4 in dem verschlossenen Zustand. Wie Fig. 2a zu entnehmen ist, ist der Spalt zwischen der Schale 2 und dem Frachttor 4 durch den Verschluss 8 verschlossen. Dadurch ist das Frachttor 4 verriegelt. Ferner sind in Fig. 2a zwei zweite Verriegelungselemente 12 vorgesehen. Diese zweiten Verriegelungselemente 12 stellen eine weitere Verriegelung des Frachtrohres 4 zur Verfügung. Insbesondere wird durch die zweiten Verriegelungselemente 12 das Frachttor 4 an dem Torrahmen 10 gehaltert.

Fig. 2a stellt den vollkommen geschlossenen, verriegelten Zustand des Frachttores 4, beispielsweise während dem Betrieb des Flugzeugs, d.h. während des Fluges, dar.

Die Fig. 2b zeigt ein erstes Öffnungsstadium des Frachttores 4. Hierzu wird, wie Fig. 2b zu entnehmen ist, das erste Verschlusselement 8 (Verschluss) aus dem Spalt zur Innenseite des Flugzeugrumpfes versetzt. Beispielsweise kann hierfür das erste Verriegelungselement 8 auf die Innenseite des Frachttors 4 angeklappt werden, wie in Fig. 2b dargestellt.

Fig. 2c zeigt ein zweites Öffnungsstadium des Frachttores 4, das im Vergleich zum ersten Öffnungsstadium einen späteren Öffnungszeitpunkt darstellt. Wie der Fig. 2c zu entnehmen ist, ist das Frachttor 4 entlang einer Längsrichtung des Flugzeugrumpfes (der X-Richtung des Flugzeugrumpfes) versetzt worden, so dass die zweiten Verriegelungsklemmen 12 entriegelt worden sind. Hierzu wurde die Bewegungsfreiheit des Frachttors 4 in der Öffnung 6 ausgenützt und hier durch den Spalt, der mittels des ersten Verriegelungselementes 8 in geschlossenem Zustand verschlossen ist, zur Verfügung gestellt wird. Dementsprechend ist vorzugsweise eine Spaltbreite des Spaltes der mittels des ersten Verriegelungselementes 8 im geschlossenen Zustand verschlossen wird, so eingestellt, dass genügend Bewegungsfreiheit für das Frachttor 4 dahingehend ermöglicht wird, dass die zweiten Verriegelungselemente 12 entriegelt werden.

Fig. 2d zeigt ein drittes Öffnungsstadium des Frachttores 4. Wie mit den Pfeilen in Fig. 2d dargestellt ist, wird das Frachttor 4 zur Außenseite der Schale 2 aus der Öffnung herausgeführt. Vorzugsweise wird dies mittels einer Bewegung entlang einer Normalen zu der Schale 2 erzielt. Dann wird das Frachttor 4 entlang der Längsrichtung des Flugzeugs, die hier mittels des Pfeils 14 dargestellt ist, so verschoben, dass die Öffnung in dem Flugzeugrumpf freigegeben wird.

Wie den Fig. 2a bis 2d zu entnehmen ist, geschieht die Verriegelung des Frachttores 4 durch das parallel zur Flugzeug-X-Achse (Längsachse des Flugzeugrumpfes) verschieben des Frachttores 4 mit den zweiten Verriegelungselementen 12. Die zweiten Verriegelungselemente 12 können beispielsweise an dem Frachttor 4 angebrachte Verriegelungszapfen sein, die in entsprechende, an der Flugzeugstruktur befindliche Buchsen eingreifen. Um eine solche Verriegelung zu gewährleisten, muss wie zuvor schon angesprochen, die Toröffnung größer als das Frachttor 4 selbst sein. Der sich daraus ergebende Spalt dient nun seinerseits als Element der Verriegelung indem das erste Verriegelungselement 8 zum Verschließen des Spaltes verwendet wird. Das Tor, das nach der Verriegelung mit den zweiten Verriegelungselementen 12 noch eine Bewegungsfreiheit entlang der Längsrichtung des Flugzeuges haben kann, wird nun durch das erste Verriegelungselement 8 in der Toröffnung fest eingeklemmt. Um eine derartige Bewegung des Frachttors 4 zu ermöglichen, ist das Frachttor 4 vorzugsweise als Schiebetor ausgestaltet. Solch ein Schiebetor wird an drei torseitigen Rollen in Laufschienen geführt, die beispielsweise an der Flugzeugstruktur angebracht werden können. Dies wird im Folgenden weiter beschrieben werden.

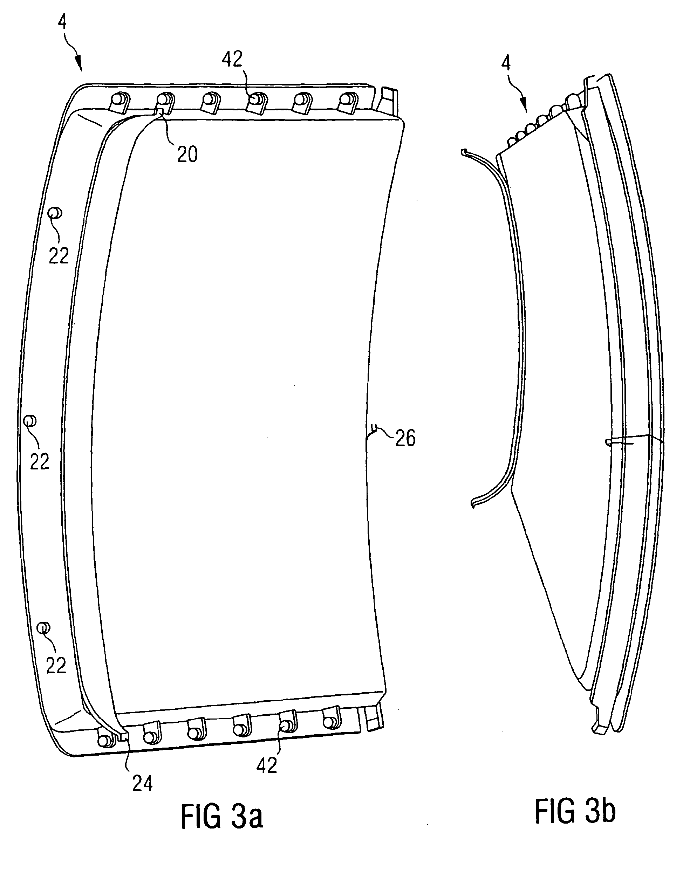

Fig. 3a zeigt eine dreidimensionale Darstellung der Innenseite des Frachttores 4. Fig. 3b zeigt eine dreidimensionale Seitenansicht des Frachttores von 3a. Wie den Fig. 3a und 3b zu entnehmen ist, ist das Frachttor 4 der Wölbung des Rumpfes angepasst. Die türseitigen Verriegelungselemente, die in entsprechende rumpfseitige Verriegelungselemente zur Bildung des zweiten Verriegelungselementes eingreifen, sind hier als Verriegelungszapfen ausgebildet. Wie Fig. 3a zu entnehmen ist, sind obere Verriegelungszapfen 42 und untere Verriegelungszapfen 42 vorgesehen. Ebenfalls an der Oberseite und an der Unterseite des Frachttores 4 sind Führungsrollen vorgesehen. Insbesondere ist eine obere Führungsrolle 20 vorgesehen und eine untere Führungsrolle 24, die ausgebildet sind in entsprechenden Führungsschienen, die an dem Rumpf angebracht sind (nicht dargestellt) einzugreifen. Ferner weist das in Fig. 3a und 3b dargestellte Frachttor 4 mittlere Führungsrollen 26 auf, die ausgebildet sind in eine entsprechende mittlere Führungsschiene, die an dem Flugzeugrumpf angebracht ist, einzugreifen. Ferner können an dem Frachttor 4 seitliche Verriegelungszapfen 22 vorgesehen sein, die in entsprechende Nuten den dem Torrahmen 10 in der Öffnung 6 oder in dem ersten Verriegelungselement 8 einrasten oder eingreifen können.

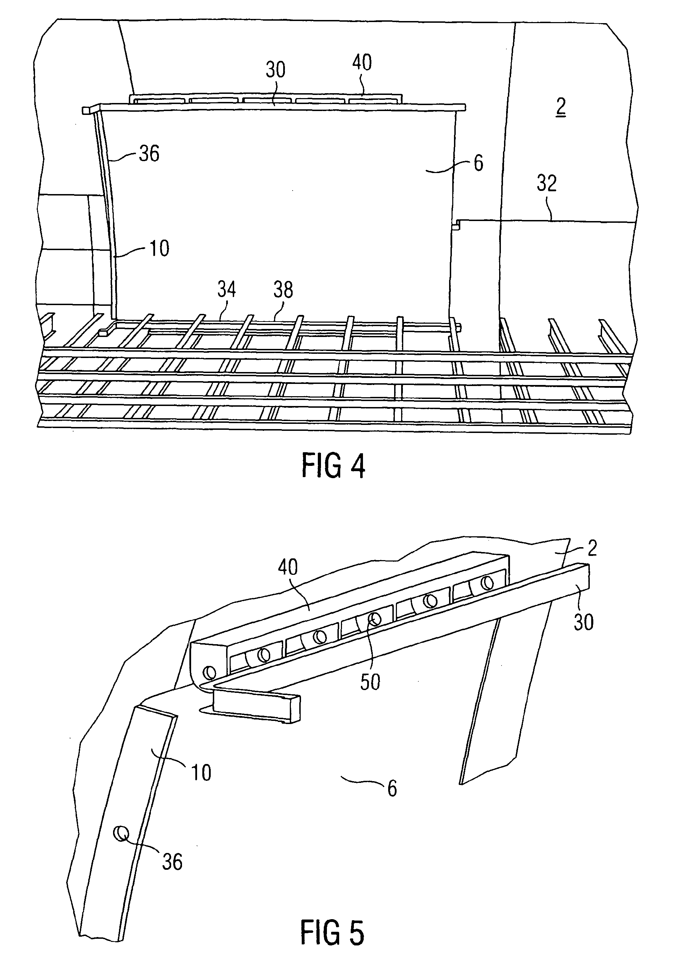

Fig. 4 zeigt eine dreidimensionale Ansicht, die die Öffnung von dem Frachtraum des Flugzeugs aus betrachtet darstellt. Die in Fig. 4 dargestellten Frachttorhalterungen sind insbesondere ausgestaltet, ein Frachttor 4, wie es in den Fig. 3a und 3b dargestellt ist, zu führen oder zu haltern. Dies wird im Folgenden detaillierter beschrieben.

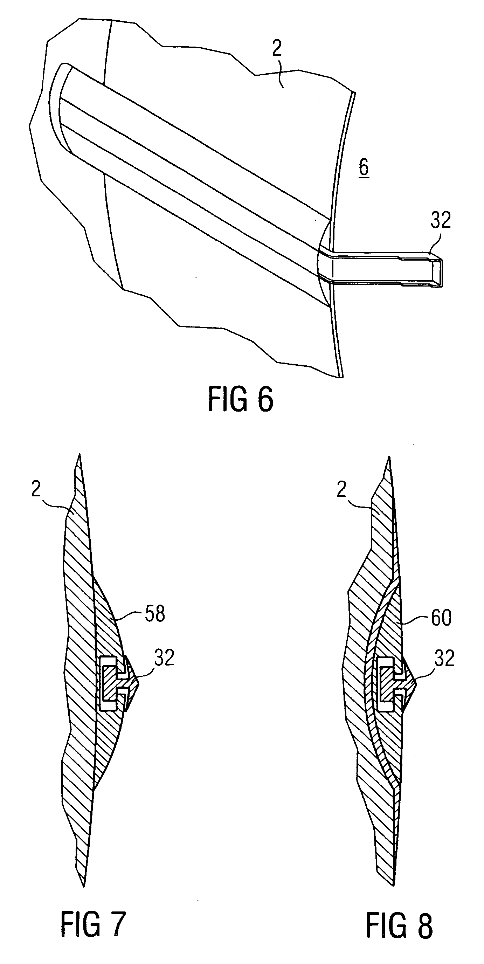

Wie Fig. 4 zu entnehmen ist, sind eine obere Führungsschiene 30 vorgesehen, eine mittlere Führungsschiene 32 und eine untere Führungsschiene 34. Die obere Führungsschiene 30 und die untere Führungsschiene 34 sind in etwa gegenüber entlang der Öffnung in der Schale 2 des Flugzeugrumpfes angeordnet. Die mittlere Führungsschiene 32 ist in oder auf der Schale 2 derart angeordnet, dass das Frachttor 4 beim Öffnen gehaltert werden kann. Insbesondere wird durch die mittlere Führungsschiene 32 das Frachttor in der geöffneten Position geführt, in der das Frachttor in der Fig. 4 gezeigte Perspektive außen nach rechts verschoben worden ist. Ausführungsbeispiele der mittleren Führungsschiene 32 werden im Folgenden mit Verweis auf die Fig. 6 bis 8 detaillierter beschrieben werden.

Wie Fig. 4 zu entnehmen ist, sind die obere Führungsschiene 30, die mittlere Führungsschiene 32 und die untere Führungsschiene 34 im Wesentlichen parallel zueinander angeordnet und im Wesentlichen parallel zu der Flugzeuglängsachse, das heißt zu der X-Achse des Flugzeugs. Dadurch wird die Führung und Versetzung des Frachters 4 entlang der Längsachse des Flugzeugs ermöglicht.

Wie Fig. 4 ferner zu entnehmen ist, sind in dem Torrahmen 10, der die Öffnung 6 begrenzt, seitliche Verriegelungsbuchsen 36 vorgesehen, die beispielsweise mit dem seitlichen Verriegelungszapfen 22 (Fig. 3a) des Frachttores 4 zusammenwirken. Dadurch kann ein Sitz des Frachttores in den Torrahmen 10 präzisiert und fixiert werden. Ferner sind in dem Torrahmen 10 untere Verriegelungsbuchsen 38 und obere Verriegelungsbuchsen 40 vorgesehen, die mit den oberen und unteren Verriegelungszapfen (Fig. 3a) des Frachttores 4 zur Bildung der zweiten Verriegelungselemente 12 zusammenwirken.

Fig. 5 zeigt eine dreidimensionale Ansicht, die die Anordnung und den Aufbau der oberen Verriegelungsbuchsen 40 und der oberen Verriegelungsschiene 30 in größerem Detail zeigt. Wie Fig. 5 zu entnehmen ist, können die oberen Verriegelungsbuchsen 40 ausgestaltet werden, um mit in äquidistanten Vertikalstreben vorgesehenen Löchern 50 in Eingriff zu sehen. Die Löcher 50 sind vorzugsweise fluchtend derart angeordnet, dass die oberen Verriegelungszapfen 42 des Frachttors 4 (Fig. 3a) mittels einer Bewegung entlang der Längsrichtung des Flugzeugs verriegelbar sind.

Fig. 6 zeigt eine dreidimensionale Ansicht an der Außenseite der Schale 2 des Flugzeugrumpfes mit der mittleren Führungsschiene. Wie Fig. 6 zu entnehmen ist, weist die mittlere Führungsschiene 6 einen Bereich auf, der zur Innenseite, das heißt zum Flugzeuginneren hin gebogen ist und in die Öffnung 6 hineinragt. Mit diesem in das Flugzeuginnere hineinragenden Bereich der Führungsschiene 32 sind die mittleren Führungsrollen (Fig. 3a) des Frachttores 4 in Eingriff, wenn das Frachttor vollkommen verriegelt ist (das heißt, die ersten und zweiten Verriegelungselemente verriegelt sind). Auch ist das Frachttor 4 mit diesem nach innen weisenden Bereich der Führungsschiene 32 in Eingriff, so lange sich das Frachttor 4 in der Ebene der Schale 2 bewegt. Insbesondere ist dies der Fall, wenn die zweiten Verriegelungselemente 12 entriegelt werden. Wenn dann das Frachttor 4 aus der Öffnung 6 auf die Außenseite des Flugzeugrumpfes heraus versetzt wird, rollen die mittleren Führungsrollen 26 auf der mittleren Führungsschiene 32 auf der Außenseite des Flugzeugrumpfes entlang, bis das Frachttor 4 in der vollkommen geöffneten Position ist, in der die Frachttoröffnung 6 im Wesentlichen freigegeben ist.

Die Fig. 7 und 8 zeigen Schnittansichten von bevorzugten Ausführungsbeispielen der mittleren Führungsschiene 32. Wie Fig. 7 zu entnehmen ist, ist die Führungsschiene 32 auf der Schale 2 mittels eines Verstärkungselementes 58 angeordnet. Im Gegensatz dazu ist die Führungsschiene 32 in dem Ausführungsbeispiel von Fig. 8 in die Schale 2 mittels eines anderen Verstärkungselementes 60 eingebettet. In dem Ausführungsbeispiel von Fig. 8 kann es erforderlich sein, dass Strukturveränderungen der Schale im Bereich der mittleren Führungsschiene 32 erforderlich sind.

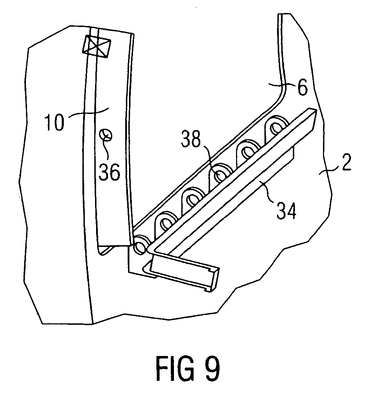

Fig. 9 zeigt eine dreidimensionale Detailansicht der unteren Führungsschiene 34. Wie Fig. 9 zu entnehmen ist, ist die untere Führungsschiene 2 im Wesentlichen parallel zu dem unteren Rand der Öffnung 6 vorgesehen. Die unteren Verriegelungsbuchsen 38 sind im Wesentlichen funktional gleich den oberen Verriegelungsbuchsen 40 angeordnet. Vorzugsweise sind die untere Führungsschiene 34 und die obere Führungsschiene 30 sowie die mittlere Führungsschiene 32 derart angeordnet, dass sie eine parallele Führung des Frachttors 4 zur Verfügung stellen, so dass das Frachttor linear geführt wird.

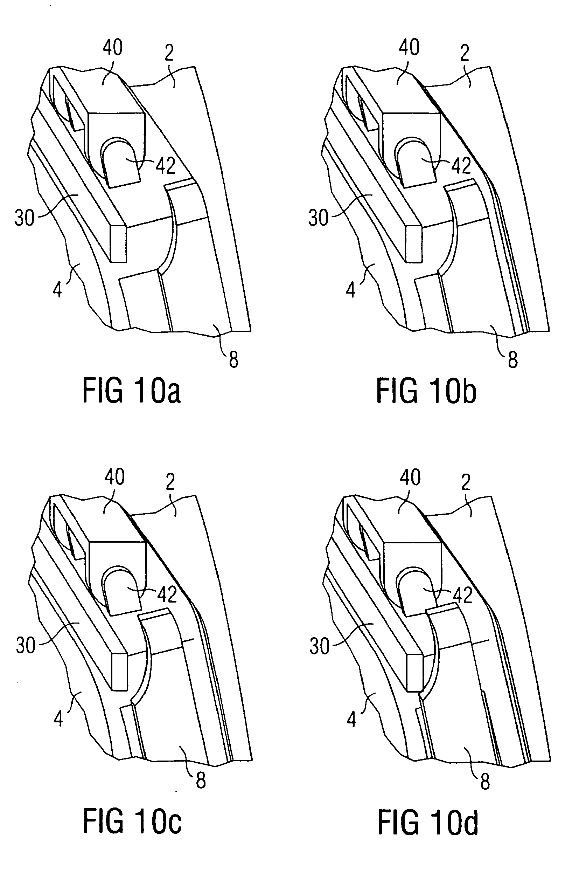

Die Fig. 10a bis 10d zeigen dreidimensionale Ansichten von Öffnungsstadien des Frachttors 4 gemäß einem Ausführungsbeispiel der vorliegenden Erfindung. Die Fig. 10a zeigt den vollkommen verriegelten Zustand, in dem sowohl das erste Verriegelungselement 8 als auch die zweiten Verriegelungselemente 12 (bestehend aus Zapfen 42 und oberen Verriegelungsbuchsen 40) verriegelt sind. In dem in Fig. 10d dargestellten Zustand ist das erste Verriegelungselement 8 komplett zurückgeführt, so dass das Frachttor 4 entlang der Längsachse des Flugzeugs versetzt werden könnte, um die zweiten Verriegelungselemente zu entriegeln. Wie den Fig. 10a bis 10d zu entnehmen ist, wird das erste Verriegelungselement 8 aus dem Spalt herausgezogen, so dass das Frachttor 4 innerhalb der Öffnung 6 eine Bewegungsfreiheit derart hat, dass es eine Linksbewegung entlang der Längsachse des Flugzeugs ausführen kann, wodurch dann die zweiten Verriegelungselemente 12 entriegelt werden können.

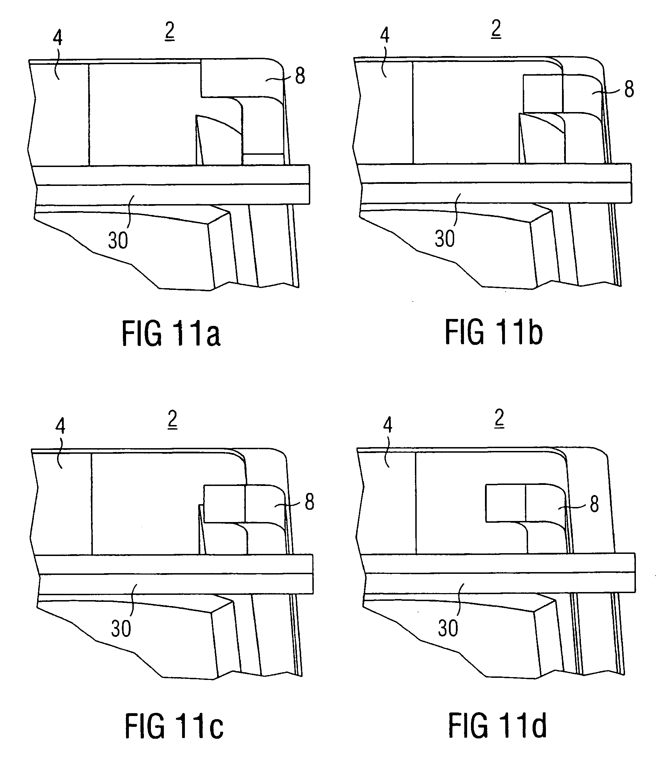

Die Fig. 11 a bis 11 d zeigen die in den Fig. 10a bis 10d dargestellten Entriegelungszustände aus einer anderen Perspektive. Wie den Fig. 11a bis 11d zu entnehmen ist, wird das erste Verriegelungselement 8 zur Innenseite des Flugzeugrumpfes hin aus dem Spalt genommen. Dann wird das Verriegelungselement 8, wie in der Fig. 11d dargestellt, hinter das Frachttor 4 versetzt, wie dies auch schon der Fig. 2b zu entnehmen war. Diesbezüglich kann eine separate Führung oder Halterung des ersten Verriegelungselementes 8 auf der Innenseite des Frachttors 4 vorgesehen sein.

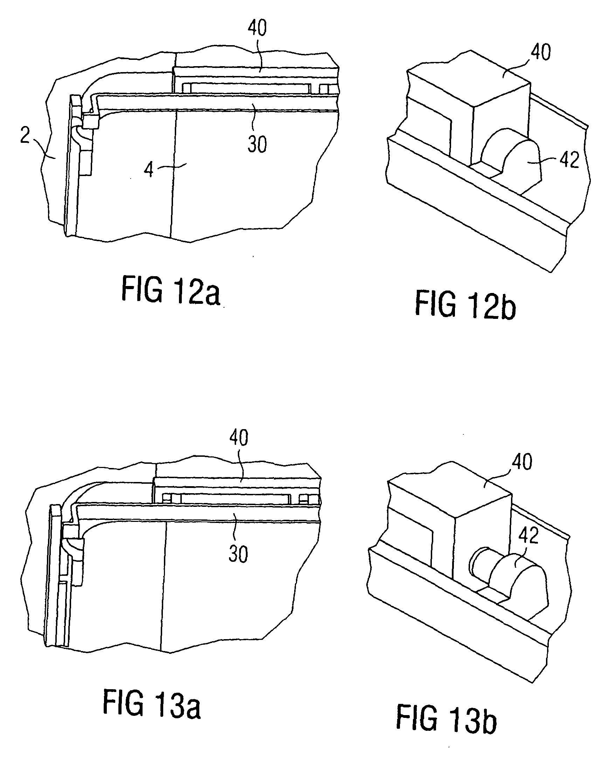

Fig. 12a zeigt eine dreidimensionale Ansicht, die die verriegelten zweiten Verriegelungselemente zeigt. Fig. 12b zeigt eine Detailansicht der Fig. 12a. Die Fig. 12a und 12b zeigen einen Zustand in dem die zweiten Verriegelungselemente verriegelt sind, d.h. der Verriegelungszapfen 42 vollkommen in den oberen Verriegelungsbuchsen eingeführt ist. Die Fig. 13a und 13b zeigen den Fig. 12a und 12b entsprechende Ansichten, allerdings ist in Fig. 13a und 13b das zweite Verriegelungselement entriegelt, d.h. wie insbesondere Fig. 13b zu entnehmen ist, ist der obere Verriegelungszapfen 42 aus der Verriegelungsbuchse 40 herausgeführt.

Die Fig. 14a bis 14c zeigen dreidimensionale Detailansichten der oberen Führungsschiene 30 der oberen Verriegelungsbuchsen 40 und der Anordnung des Frachters 4 in der Schale 2.

Wie den Fig. 14a bis 14c zu entnehmen ist, ist das Frachttor in diesen Figuren in einem Zustand, in dem die zweiten Verriegelungselemente vollkommen entriegelt sind und das Frachttor nun, wie in den entsprechenden Ansichten den Fig. 15a bis 15c dargestellt ist, nach außen versetzt werden kann, um dann seitlich entlang des Rumpfes weggeschoben werden kann.

Fig. 16 zeigt eine dreidimensionale Ansicht der Außenseite des Flugzeugrumpfes bei vollkommen geöffnetem Frachttor 4. Wie Fig. 16 zu entnehmen ist, ist vorzugsweise das Frachttor 4 so weit auf der Außenseite des Flugzeugrumpfes unter der Führung zumindest durch die mittlere Führungsschiene 32 verschiebbar, dass die gesamte Öffnung 6 in dem Flugzeugrumpf frei zugänglich ist.

Fig. 17 zeigt eine andere dreidimensionale Ansicht, die das geöffnete Frachttor 4 darstellt.

Durch die oben beschriebene Anordnung des Frachttores 4 kann, sobald das Frachttor 4 aus der Öffnung 6 in der Schale 2 nach außen geschoben worden ist, kollisionsfrei entlang der Außenseite des Rumpfes verschoben werden.

Vorzugsweise ermöglicht die oben beschriebene Erfindung einen einfachen Verriegelungsmechanismus, der mit wenigen beweglichen Teilen auskommt. Dies ermöglicht nahezu eine Wartungsfreiheit des Frachttores und auch ein geringes Gewicht. Auch vermindert dies eine Fehleranfälligkeit des Verriegelungsmechanismus. Durch verminderte Lastfälle durch Böenluftlast oder durch Ausfall eines Hydraulikzylinders kann eine Strukturgewichtsminderung des Frachttores erzielt werden, die beispielsweise bei einer Vergleichsrechnung gegenüber dem heute gebräuchlichen Airbus A300/600-Frachttor einen Gesamtgewichtsvorteil von ca. 430 kg ergeben kann.

## Patentansprüche

1. Flugzeugtor (4) zum Verschließen einer Öffnung(6) in einer Schale (2) eines Flugzeugs,
wobei das Flugzeugtor (4) entlang im Wesentlichen einer Längsrichtung des Flugzeugs versetzbar ist, und
wobei die Öffnung (6) in der Schale (3) des Flugzeugs größer ist als das Flugzeugtor (4), so dass bei dem in der Öffnung (6) angeordneten Flugzeugtor (4) zwischen einer ersten Begrenzung des Flugzeugtors und einer zweiten Begrenzung der Öffnung ein Spalt ist,
**dadurch gekennzeichnet, dass**
ein erstes Verriegelungselement (8) vorgesehen ist, das in dem Spalt zwischen der ersten Begrenzung des Flugzeugtors (4) und der zweiten Begrenzung der Öffnung zur Verriegelung des Flugzeugtors (4) in der Öffnung anzuordnen ist, so dass der Spalt verschließbar ist.

2. Flugzeugtor nach Anspruch 1,
wobei zumindest ein zweites Verriegelungselement (12) derart vorgesehen ist, dass das Flugzeugtor (4) mittels einer Versetzung entlang der Längsrichtung des Flugzeugs in der Öffnung (6) verriegelt wird.

3. Flugzeugtor nach Anspruch 2,
wobei zum Verriegeln des Flugzeugtors (4) zuerst das Flugzeugtor in der Öffnung (6) angeordnet wird, dann das Flugzeugtor (4) in der Öffnung (6) entlang der Längsrichtung des Flugzeugs zur Verriegelung des zumindest einen zweiten Verriegelungselement (12) versetzt wird und dann das erste Verriegelungselement (8) in dem Spalt zwischen der ersten Begrenzung des Flugzeugtors (4) und der zweiten Begrenzung der Öffnung (6) zur Verriegelung angeordnet wird.

4. Flugzeugtor nach einem der Ansprüche 1 bis 3,
wobei das Flugzeugtor (4) zwischen einem geschlossenen Zustand, in dem das Flugzeugtor (4) in der Öffnung (6) vollständig verriegelt ist, und einem geöffneten Zustand, in dem das Flugzeugtor (4) gegenüber der Öffnung (6) auf einer Außenseite der Schale (2) versetzt ist, so dass ein möglichst großer Bereich der Öffnung (6) frei ist und nicht durch das Flugzeugtor (4) verdeckt ist, versetzbar ist,
wobei zur Führung des Flugzeugtors (4) zwischen dem geschlossenen Zustand und dem geöffneten Zustand zumindest eine Führungsschiene (30) an der Schale (2) angeordnet ist, in die Haltelemente (20), die an dem Flugzeugtor (4) angeordnet sind, eingreifen.

5. Flugzeugtor nach Anspruch 4,
wobei die zumindest eine Führungsschiene (30) und die Halteelemente (20) derart zusammenwirken, dass eine Führung des Flugzeugtors (4) entlang der Längsrichtung des Flugzeugs und entlang der Schwerkraft sichergestellt ist.

6. Flugzeugtor nach Anspruch 5,
wobei die zumindest eine Führungsschiene eine Führung des Flugzeugtors (4) derart ermöglicht, dass das Flugzeugtor (4) von dem geschlossenen Zustand zum Entriegeln zuerst entlang der Längsachse des Flugzeugs um einen ersten Betrag versetzbar ist, zum Herausführen des Flugzeugtors (4) entlang einer Normalen auf der Schale (2) um einen zweiten Betrag versetzbar ist, und zum Freigeben der Öffnung (6) zum geöffneten Zustand hin auf der Außenseite der Schale (2) entlang der Längsachse des Flugzeugs um einen dritten Betrag versetzbar ist,
wobei das Flugzeugtor (4) im Wesentlichen keine Drehbewegung ausführt.

7. Verfahren zum Öffnen und Verschließen einer Öffnung (6) in einer Schale (2) eines Flugzeugs, umfassend den Schritt:
Versetzen eines Flugzeugtors (4) entlang im Wesentlichen einer Längsrichtung des Flugzeugs,
wobei die Öffnung (6) in der Schale (2) des Flugzeugs größer ist als das Flugzeugtor (4), so dass bei dem in der Öffnung angeordneten Flugzeugtor (4) zwischen einer ersten Begrenzung des Flugzeugtors (4) und einer zweiten Begrenzung der Öffnung (6) ein Spalt ist,
**dadurch gekennzeichnet, dass**
zum Verriegelung des Flugzeugtors (4) in der Öffnung (6) ein erstes Verriegelungselement (8) in dem Spalt zwischen der ersten Begrenzung des Flugzeugtors (4) und der zweiten Begrenzung der Öffnung (6) angeordnet wird, so dass der Spalt verschlossen wird.

8. Verfahren nach Anspruch 7,
wobei zum Verriegelung des Flugzeugtors (4) in der Öffnung (6) zumindest ein zweites Verriegelungselement (12) derart entlang der Längsrichtung des Flugzeugs versetzt wird, dass das Flugzeugtor (4) in der Öffnung (6) verriegelt wird.

9. Verfahren nach Anspruch 8,
wobei zum Verriegeln des Flugzeugtors (4) zuerst das Flugzeugtor (4) in der Öffnung (6) angeordnet wird, dann das Flugzeugtor (4) in der Öffnung (6) entlang der Längsrichtung des Flugzeugs zur Verriegelung des zumindest einen zweiten Verriegelungselements (12) versetzt wird, und dann das erste Verriegelungselement (8) in dem Spalt zwischen der ersten Begrenzung des Flugzeugtors (4) und der zweiten Begrenzung der Öffnung (6) zur Verriegelung angeordnet wird.

10. Verfahren nach einem der Ansprüche 7 bis 9,
wobei das Flugzeugtor (4) zwischen einem geschlossenen Zustand, in dem das Flugzeugtor (4) in der Öffnung (6) vollständig verriegelt ist, und einem geöffneten Zustand, in dem das Flugzeugtor (4) gegenüber der Öffnung (6) auf einer Außenseite der Schale (2) versetzt wird, so dass ein möglichst großer Bereich der Öffnung (6) frei ist und nicht durch das Flugzeugtor (4) verdeckt ist,
wobei das Flugzeugtor (4) entlang der Längsrichtung des Flugzeugs und entlang der Schwerkraft gehaltert ist.

11. Verfahren nach Anspruch 10,
wobei das Flugzeugtor (4) von dem geschlossenen Zustand zum Entriegeln zuerst entlang der Längsachse des Flugzeugs um einen ersten Betrag versetzt wird, zum Herausführen des Flugzeugtors (4) entlang einer Normalen auf der Schale (2) um einen zweiten Betrag versetzt wird, und zum Freigeben der Öffnung (6) zum geöffneten Zustand hin auf der Außenseite der Schale (2) entlang der Längsachse des Flugzeugs um einen dritten Betrag versetzt wird,
wobei das Flugzeugtor (4) derart bewegt wird, dass das Flugzeugtor (4) im Wesentlichen keine Drehbewegung ausführt.

## Claims

1. Aircraft door (4) for closure of an opening (6) in a shell (2) of an aircraft,
wherein the aircraft door (4) is movable along essentially a longitudinal direction of the aircraft, and
wherein the opening (6) in the shell (2) of the aircraft is larger than the aircraft door (4), so that a gap is present at the aircraft door arranged in the opening (6) between a first limitation of the aircraft door and a second limitation of the opening,
**characterized in that** a first locking element (8) is provided, which is arrangeable in the gap between the first limitation of the aircraft door (4) and the second limitation of the opening for locking of the aircraft door (4) in the opening for closing the gap.

2. The aircraft door of claim 1,
wherein at least one second locking element (12) is provided, so that the aircraft door (4) is locked by displacing it along the longitudinal direction of the aircraft in the opening (4).

3. The aircraft door of claim 2,
wherein, for locking of the aircraft door (4), the aircraft door is first arranged in the opening (6), the aircraft door (4) is then displaced in the opening (6) along the longitudinal direction of the aircraft for locking of the at least one second locking element (12) and then the first locking element (8) is arranged in the gap between the first limitation of the aircraft door (4) and the second limitation of the opening (6) for locking.

4. The aircraft door of one of the claims 1 to 3,
wherein the aircraft door (4) is displaceable between a closed state, in which the aircraft door (4) is fully locked in the opening (6) and an opened state, in which the aircraft door (4) is displaced relative to the opening on an outside of the shell (2), so that a region, as large as possible, of the opening (6) is free and not covered by the aircraft door, and
wherein, for guiding of the aircraft door (4) between the closed state and the open state, at least one guide rail (30) is provided on the shell (2), in which the holding elements (20), which are arranged on the aircraft door (4), are engaging.

5. The aircraft door of claim 4,
wherein the at least one guide rail (30) and the holding elements (20) are adapted to interact so that a guidance of the aircraft door (4) along the longitudinal direction of the aircraft and aligned with the force of gravity is ensured.

6. The aircraft door of claim 5,
wherein the at least one guide rail allows a guidance of the aircraft door (4), in such a way that the aircraft door (4), for unlocking, is displaceable from the closed state first along the longitudinal axis of the aircraft by a first amount, for moving along a normal to the shell (2) by a second amount for removal of the aircraft door (4) from the opening, and, for releasing from the opening (6) to the opened state, is displaceable along the longitudinal axis of the aircraft by a third amount on the outside of the shell; and wherein the aircraft door essentially executes no rotational movement.

7. Method for opening and closing of an opening (6) in a shell (2) of an aircraft, comprising the step:
moving the aircraft door (4) along essentially a longitudinal direction of the aircraft.
wherein the opening (6) in the shell (2) of the aircraft is larger than the aircraft door (4), so that when the aircraft door (4) being arranged in the opening, there is a gap between a first limitation of the aircraft door (4) and a second limitation of the opening (6),
**characterized in that** a first locking element (8), for locking of the aircraft door (4) in the opening (6) is arranged in the gap between the first limitation of the aircraft door (4) and the second limitation of the opening (6) so that the gap is closed.

8. The method of claim 7,
wherein, for locking of the aircraft door (4) in the opening (6), at least one second locking element (12) is moved along the longitudinal direction of the aircraft in such a way, that the aircraft door (4) is locked in the opening (6).

9. The method of claim 8,
wherein, for locking of the aircraft door (4), the aircraft door (4) is first arranged in the opening (6), then the aircraft door (4) is displaced in the opening (6) along a longitudinal direction of the aircraft for locking of the at least one second locking element (12), and then, the first locking element (8) is arranged in the gap between the first limitation of the aircraft door (4) and the second limitation of the opening (6) for locking.

10. The method of one of the claims 7 to 9,
wherein the aircraft door (4) is displaced between a closed state, in which the aircraft door (4) is fully locked in the opening (6), and an opened state, in which the aircraft door (4) is displaced relative to the opening (6) to an outside of the shell (2), so that a region, as large as possible, of the opening (6) is free and not covered by the aircraft door (4),
wherein the aircraft door (4) is secured along the longitudinal direction of the aircraft and aligned with the force of gravity.

11. The method of claim 10,
wherein the aircraft door (4), for unlocking, is moved from the closed state along the longitudinal axis of the aircraft by a first amount, is then moved from the opening along a normal to the shell by a second amount, for removal of the aircraft door (4), and for releasing from the opening (6) to the opened state is moved on the outside of the shell (2) along the longitudinal axis of the aircraft by a third amount, and
wherein the aircraft door (4) is moved, in such a way that the aircraft door (4) executes essentially no rotational movement.

## Revendications

1. Porte d'avion (4) destinée à obturer une ouverture (6) dans une carlingue (2) d'un avion,
la porte d'avion (4) pouvant être décalée essentiellement le long d'une direction longitudinale de l'avion, et
l'ouverture (6) dans la carlingue (3) de l'avion étant plus grande que la porte d'avion (4), de sorte que, lorsque la porte d'avion (4) est disposée dans l'ouverture (6), il demeure un interstice entre une première délimitation de la porte d'avion et une seconde délimitation de l'ouverture,
**caractérisée en ce qu'** il soit prévu un premier élément de verrouillage (8) qui doit être disposé dans l'ouverture, dans l'interstice existant entre la première délimitation de la porte d'avion (4) et la seconde délimitation de l'ouverture, pour verrouiller la porte d'avion (4), de sorte que l'interstice peut être obturé.

2. Porte d'avion selon la revendication 1, dans laquelle au moins un deuxième élément de verrouillage (12) est prévu de telle façon que la porte d'avion (4) est verrouillée dans l'ouverture (6) au moyen d'un décalage le long de la direction longitudinale de l'avion.

3. Porte d'avion selon la revendication 2, dans laquelle aux fins de verrouillage, la porte d'avion est tout d'abord mise en place dans l'ouverture (6) pour verrouiller la porte d'avion (4), la porte d'avion (4) est ensuite décalée dans l'ouverture (6), le long de la direction longitudinale de l'avion, la porte d'avion (4) n'exécute essentiellement aucun mouvement de rotation pour verrouiller au moins un deuxième élément de verrouillage (12) et le premier élément de verrouillage (8) est ensuite mis en place dans l'interstice existant entre la première délimitation de la porte d'avion (4) et la seconde délimitation de l'ouverture (6).

4. Porte d'avion selon l'une quelconque des revendications 1 à 3, dans laquelle la porte d'avion (4) peut être décalée entre un état fermé, dans lequel la porte d'avion (4) est complètement verrouillée dans l'ouverture (6), et un état ouvert, dans lequel la porte d'avion (4) est décalée par rapport à l'ouverture (6) sur un côté extérieur de la carlingue (2), de façon à ce qu'une zone aussi grande que possible de l'ouverture (6) soit dégagée et ne soit donc pas recouverte par la porte d'avion (4), et dans laquelle au moins un rail de guidage (30), dans lequel viennent en prise les éléments de retenue (20) qui sont disposés sur la porte d'avion (4), est disposé sur la carlingue (2), pour guider la porte d'avion (4) entre l'état fermé et l'état ouvert.

5. Porte d'avion selon la revendication 4, dans laquelle au moins un rail de guidage (30) et les éléments de retenue (20) coopèrent de telle façon qu'un guidage de la porte d'avion (4) est assuré le long de la direction longitudinale de l'avion et le long de la verticale.

6. Porte d'avion selon la revendication 5, dans laquelle au moins un rail de guidage permettant un guidage de la porte d'avion (4), de telle façon qu'à partir de l'état fermé, la porte d'avion (4) peut être décalée tout d'abord sur une première distance, le long de l'axe longitudinal de l'avion, aux fins de déverrouillage, peut être décalé sur une deuxième distance le long d'une normale par rapport à la carlingue (2), afin de faire sortir la porte d'avion (4) et peut être décalée sur une troisième distance sur le côté extérieur de la carlingue (2) le long de l'axe longitudinal de l'avion afin de dégager l'ouverture (6) pour parvenir à l'état ouvert, et dans laquelle la porte d'avion (4) n'exécute essentiellement aucun mouvement de rotation.

7. Procédé pour ouvrir et fermer une ouverture (6) dans une carlingue (2) d'un avion, comprenant les étapes qui consistent à :
décaler une porte d'avion (4) essentiellement le long d'une direction longitudinale de l'avion, dans lequel l'ouverture (6) dans la carlingue (2) de l'avion est plus grande que la porte d'avion (4), de sorte que, lorsque la porte d'avion (4) est disposée dans l'ouverture (6), il demeure un interstice entre une première délimitation de la porte d'avion et une seconde délimitation de l'ouverture,
**caractérisée en ce qu'**il soit prévu un premier élément de verrouillage (8) qui doit être disposé dans l'ouverture, dans l'interstice existant entre la première délimitation de la porte d'avion (4) et la seconde délimitation de l'ouverture, pour verrouiller la porte d'avion (4), de sorte que l'interstice peut être obturé.

8. Procédé selon la revendication 7, dans lequel
au moins un deuxième élément de verrouillage (12) est décalé pour verrouiller la porte d'avion (4) dans l'ouverture (6) le long de la direction longitudinale de l'avion, de telle façon que la porte d'avion (4) est verrouillée dans l'ouverture (6).

9. Procédé selon la revendication 8, dans lequel, aux fins de verrouillage, la porte d'avion est tout d'abord mise en place dans l'ouverture (6) pour verrouiller la porte d'avion (4), la porte d'avion (4) est ensuite décalée dans l'ouverture (6) le long de la direction longitudinale de l'avion pour verrouiller au moins un deuxième élément de verrouillage (12) et le premier élément de verrouillage (8) est ensuite mis en place dans l'interstice existant entre la première délimitation de la porte d'avion (4) et la seconde délimitation de l'ouverture (6).

10. Procédé selon la revendication 7 à 9, dans lequel
la porte d'avion (4) est décalée entre un état fermé, dans lequel la porte d'avion (4) est complètement verrouillée dans l'ouverture (6), et un état ouvert, dans lequel la porte d'avion (4) est décalée par rapport à l'ouverture (6) sur un côté extérieur de la carlingue (2), de telle façon qu'une zone aussi grande que possible de l'ouverture (6) est dégagée et n'est donc pas recouverte par la porte d'avion (4), et dans lequel la porte d'avion (4) est maintenue le long de la direction longitudinale de l'avion et le long de la verticale.

11. Procédé selon la revendication 10, dans lequel la porte d'avion (4), à partir de l'état fermé, est décalée tout d'abord sur une première distance, le long de l'axe longitudinal de l'avion, aux fins de déverrouillage, est décalée sur une deuxième distance le long d'une normale par rapport à la carlingue (2), afin de faire sortir la porte d'avion (4) et est décalée sur une troisième distance sur le côté extérieur de la carlingue (2) le long de l'axe longitudinal de l'avion afin de dégager l'ouverture (6) pour parvenir à l'état ouvert, et dans lequel la porte d'avion (4) est déplacée de telle façon que la porte d'avion (4) n'exécute essentiellement aucun mouvement de rotation.
